Europäisches Patentamt

European Patent Office

Office européen des brevets

(19)

(11)  EP 0 678 439 B1

(12)  EUROPÄISCHE PATENTSCHRIFT

(45) Veröffentlichungstag und Bekanntmachung des Hinweises auf die Patenterteilung:
**26.05.1999 Patentblatt 1999/21**

(51) Int. Cl.6: **B62D 6/00**, B62D 31/02
// B62D101:00, B62D111:00,
B62D113:00, B62D151:00

(21) Anmeldenummer: **95102373.8**

(22) Anmeldetag: **21.02.1995**

(54) **Nicht spurgebundenes Fahrzeug mit willkürlich betätigbarer Vorderradlenkung und selbsttätig arbeitender Hinterradlenkung**

Vehicle, not track bound, with arbitrarily operated front wheel steering and self actuating rear wheel steering

Véhicule non guidée avec direction avant à commande arbitraire et direction arrière indépendante

(84) Benannte Vertragsstaaten:
**DE FR IT NL SE**

(30) Priorität: **18.04.1994 DE 4413413**

(43) Veröffentlichungstag der Anmeldung:
**25.10.1995 Patentblatt 1995/43**

(73) Patentinhaber:
**DaimlerChrysler AG**
**70567 Stuttgart (DE)**

(72) Erfinder:
 • **Frey, Gerhard, Dipl.-Ing.**
   **D-73733 Esslingen (DE)**
 • **Bayha, Wulf, Dipl.-Ing.**
   **D-70327 Stuttgart (DE)**
 • **Hirth, Thomas, Dipl.-Ing.**
   **D-70597 Stuttgart (DE)**
 • **Mauz, Uwe, Dipl.-Ing.**
   **D-73730 Esslingen (DE)**

(56) Entgegenhaltungen:
 EP-A- 0 510 365        DE-A- 3 622 072
 DE-A- 4 110 162        DE-C- 4 140 124
 DE-C- 4 407 726        GB-A-  567 975

**Beschreibung**

Die Erfindung betrifft ein nicht spurgebundenes Fahrzeug mit willkürlich betätigbarer Vorderradlenkung und einer Hinterradlenkung, die die Hinterräder bei Kurvenfahrt selbsttätig gegensinnig zu den Vorderrädern auszulenken vermag und auf eine besondere Betriebsweise einstellbar ist, bei der bei willkürlicher Auslenkung der Vorderräder aus einer Geradeausstellung oder einer dazu benachbarten Stellung das jeweils kurvenaußenseitige Hinterrad zunächst auf einer Spur läuft, die die bei Beginn der besonderen Betriebsweise vorliegenden Radaufstandsbereiche von Vorderrad und Hinterrad auf der kurvenäußeren Fahrzeugseite etwa geradlinig verbindet oder kurveninnenseitig einer die genannte Radaufstandsbereiche verbindenden geraden Linie verläuft.

Ein derartiges Fahrzeug ist Gegenstand der DE 36 22 072 A1. Dort arbeite die Hinterradlenkung bei selbsttätigem Betrieb im Prinzip derart, daß ein Punkt in Fahrzeugmitte an der Fahrzeugfrontseite und ein Punkt in Fahrzeugmitte an der Fahrzeugheckseite weitestgehend identische Bewegungsbahnen durchlaufen. In der Phase der Einleitung in eine Kurve, d.h. wenn der Fahrer die willkürlich lenkbaren Vorderräder aus der Geradeausstellung od.dgl. entsprechend der gewünschten Kurvenfahrt einlenkt, wird der genannte Punkt am Fahrzeugheck zunächst über die vor Einleitung der Kurvenfahrt vom Punkt an der Fahrzeugfront durchlaufene, im wesentlichen gerade Bewegungsbahn geführt.

Wird das Fahrzeug unter Ausschaltung des Motors stillgesetzt und nachfolgend erneut gestartet, derart, daß der Fahrer aus dem Stand mit nach rechts oder links eingeschlagenen Vorderrädern losfährt, führt die selbsttätige Hinterradlenkung den vorgenannten Punkt am Fahrzeugheck zunächst über eine gerade Bewegungsbahn, die von der Position, die der heckseitige Punkt am Fahrzeug beim vorangegangenen Stillstand eingenommen hat, in Richtung der Fahrzeuglängsachse des stillstehenden Fahrzeuges in Vorwärtsrichtung führt, wobei dann die weitere Bewegungsbahn des heckseitigen Punktes am Fahrzeug tangential in die vom frontseitigen Punkt des Fahrzeuges zurückgelegte Bewegungsbahn übergeht.

Aus der DE 39 29 994 A1 ist es bekannt, bei Fahrzeugen mit Hinterradlenkung einen besonders langen Radstand vorzusehen, d.h. die Vorderräder sind nahe der Fahrzeugfront und die Hinterräder nahe des Fahrzeughecks angeordnet. Die Hinterräder werden dann in Abhängigkeit vom Lenkwinkel der Vorderräder derart gesteuert, daß sich das Fahrzeug bei Kurvenfahrt kinematisch wie ein Fahrzeug mit kurzem Radstand und unlenkbaren Hinterrädern verhält. Auf diese Weise kann einerseits bei beengten Straßenverhältnissen eine gute Wendigkeit des Fahrzeuges mit für den Fahrer leicht einsehbarem kinematischen Verhalten gewährleistet werden. Andererseits zeichnet sich das Fahrzeug bei schneller Fahrt aufgrund des langen Radstandes durch gute Spurstabilität aus.

Das Fahrverhalten eines solchen Fahrzeuges ist zwar aufgrund seiner Ähnlichkeit mit dem Fahrverhalten eines Fahrzeuges, welches einen kurzen Radstand und unlenkbare Hinterräder aufweist, für den Fahrer leicht erlernbar. Gleichwohl können Schwierigkeiten auftreten, wenn das Fahrzeug eine Position dicht neben einer Wand mit zur Wand paralleler Fahrzeuglängsachse erreicht. Wenn der Fahrer nachfolgend das Fahrzeug von der Wand wegzulenken sucht, kann das Fahrzeugheck bei übermäßigem Lenkeinschlag mit dem Wand kollidieren.

Ähnliche Schwierigkeiten treten auf, wenn ein entsprechend konzipierter Omnibus an einer Haltestelle dicht neben einer Bordsteinkante anhält und nachfolgend vom Fahrer mit stärkerem Lenkeinschlag zur Fahrbahn zurückgelenkt werden soll. In einem solchen Falle können die lenkbaren Hinterräder in ungewollter und unkomfortabler Weise die Bordsteinkante überrollen.

Wenn nun die aus der DE 36 22 072 A1 bekannte besondere Betriebsweise, mit der die vorangehend beschriebenen Schwierigkeiten vermieden werden können, bei einem Fahrzeug vorgesehen wird, welches sich durch automatische Lenkung seiner Hinterräder kinematisch im wesentlichen wie ein Fahrzeug mit kurzem Radstand und unlenkbaren Hinterrädern verhält, kann sich gleichwohl ein unerwünscht gewöhnungsbedürftiges Fahrverhalten zumindest dann ergeben, wenn das Fahrzeug unter Ausschaltung des Motors im Verlauf einer Kurvenfahrt stillgesetzt und nachfolgend erneut gestartet wird. Denn in einem solchen Falle würde das Fahrzeug gemäß dem Konzept der DE 36 22 072 A1 auch bei vor und nach dem Stillstand gleichgebliebenem Lenkeinschlag der Vorderräder zunächst mit dem Heck eine geradlinige Bewegungsbahn durchlaufen.

Deshalb ist es Aufgabe der Erfindung, für ein Fahrzeug der eingangs angegebenen Art ein deutlich verbessertes Lenkkonzept aufzuzeigen.

Diese Aufgabe wird erfindungsgemäß dadurch gelöst, daß die Hinterradlenkung bei normalem selbsttätigen Betrieb den Hinterradlenkwinkel derart zu steuern vermag, daß kinematisch ein Fahr- bzw. Lenkverhalten wie bei einem Fahrzeug gleicher Länge, jedoch mit kurzem bzw. kürzerem Radstand und nicht lenkbaren Hinterrädern erreicht wird, und daß die Hinterradlenkung nach einem Stillstand des Motors entsprechend der besonderen Betriebsweise arbeitet, wenn die unmittelbar nach dem Stillstand vorliegende Kombination der Vorderrad- und Hinterradlenkwinkel von einer bei Normalbetrieb möglichen Kombination um mehr als einen vorgegebenen Schwellwert abweicht.

Die Erfindung beruht auf dem allgemeinen Gedanken, beim Start des Motors die Lenkwinkel der Vorder- und Hinterräder zu erfassen, um festzustellen, ob eine normale Lenkwinkelkombination vorliegt oder nicht, wobei die normale Lenkwinkelkombination bei der Fahrt des Fahrzeuges zu dem kinematischen Verhalten eines Fahrzeuges mit unlenkbaren Hinterrädern und kurzem Radstand führt. Liegt eine derartige normale Winkelkombination vor, fährt also das Fahrzeug nach dem Start des Motors entsprechend einem herkömmlichen Fahrzeug mit kurzem Radstand und unlenkbaren Hinterrädern weiter.

Wird das Fahrzeug beispielsweise auf einer Wendeschleife mit geringem Radius stillgesetzt, so kann es nach einem erneuten Start in prinzipiell herkömmlicher Weise der Wendeschleife folgen.

Sollte dagegen das Fahrzeug im Verlauf des besonderen Betriebszustandes der Hinterradlenkung stillgesetzt worden sein, ist dies gleichbedeutend damit, daß unmittelbar nach dem erneuten Start des Motors eine „ungewöhnliche" Lenkwinkelkombination vorliegt. Dies hat dann zur Folge, daß das Fahrzeug zunächst ein Lenkverhalten entsprechend der besonderen Betriebsweise aufweist.

Im Ergebnis benötigt die Hinterradlenkung für diese unterschiedlichen Betriebsweisen nach dem Start des Fahrzeugmotors kein „Gedächtnis" für den vor dem Stillstand des Motors vorhandenen Betriebszustand. Es müssen lediglich Lenkwinkelkombinationen ausgewertet werden.

Der Übergang von der besonderen Betriebsweise zur normalen Betriebsweise kann derart erfolgen, daß der Hinterradlenkwinkel, welcher aufgrund der besonderen Betriebsweise nach einer etwa der Länge des Radstandes des Fahrzeuges entsprechenden Fahrweglänge erreicht worden ist, zunächst eingestellt bleibt, bis die Vorderradlenkung aufgrund eines fahrerseitigen Lenkmanövers einen Vorderradlenkwinkel erreicht, welcher bei normaler Betriebsweise in Kombination mit dem eingestellten Hinterradlenkwinkel auftreten kann; sodann wird die Hinterradlenkung entsprechend der normalen Betriebsweise in Abhängigkeit vom Vorderradlenkwinkel betätigt, bis wiederum die oben angegebenen Kriterien zum Übergang auf den besonderen Betrieb vorliegen.

Im übrigen wird hinsichtlich bevorzugter Merkmale der Erfindung auf die Ansprüche sowie die nachfolgende Erläuterung der Zeichnung verwiesen, in der bevorzugte Ausführungsformen der Erfindung sowie die verschiedenen Betriebsweisen dargestellt sind.

Dabei zeigt

Fig. 1     einen erfindungsgemäß ausgestalteten Omnibus in schematisierter Seitenansicht,

Fig. 2     eine schematisierte Draufsicht zur Erläuterung der normalen Betriebsweise der Lenkung bei Kurvenfahrt und

Fig. 3     eine Draufsicht zur Erläuterung der besonderen Betriebsweise der Lenkung, wobei zwei Fahrzeugpositionen nahe einer Haltestelle dargestellt sind, an der der Omnibus dicht neben einer Bordsteinkante anhalten soll.

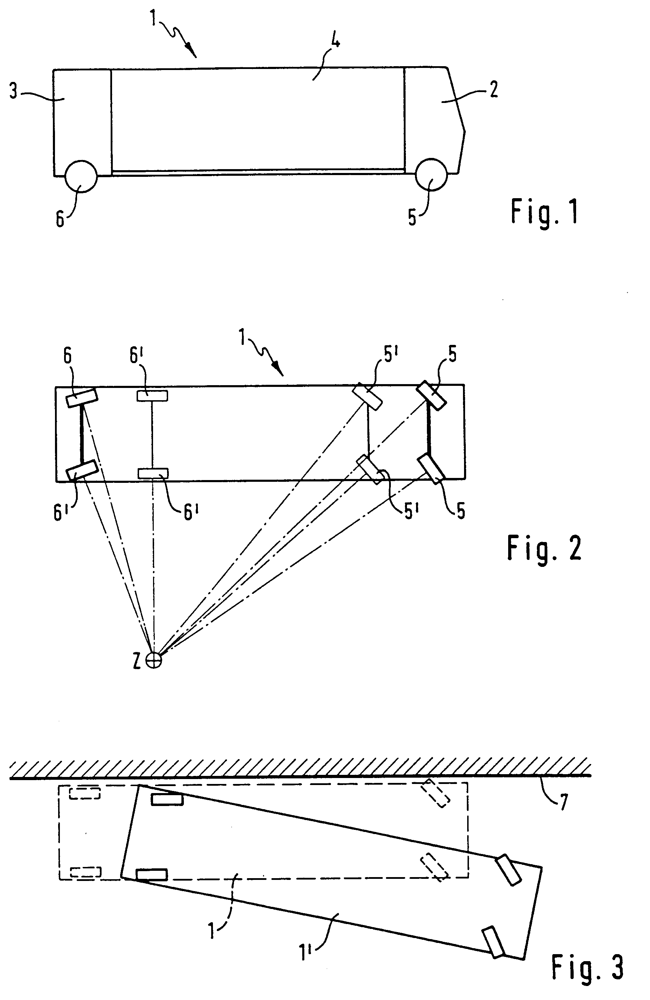

Der in Fig. 1 dargestellte Omnibus 1 besitzt eine modulare Struktur und besteht im wesentlichen aus einem Frontmodul 2, einem Heckmodul 3 sowie einem als Fahrgastzelle 4 ausgebildeten Nutzlastmodul.

Das Frontmodul 2 umfaßt die Vorderachse mit den willkürlich lenkbaren Vorderrädern 5. In entsprechender Weise umfaßt das Heckmodul 3 die Hinterachse mit den ebenfalls - allerdings vorzugsweise automatisch - lenkbaren Hinterrädern 6 sowie einen die Hinterräder 6 antreibenden Motor (nicht dargestellt). Aufgrund standardisierter Anschlußbereiche können die Front- und Heckmodule 2 und 3 bei der Fertigung des Omnibusses 1 grundsätzlich mit unterschiedlichen Fahrgastzellen 4 kombiniert werden. Dabei übernimmt die Fahrgastzelle 4 als tragende Struktur die stabile Verbindung der Front- und Heckmodule 2 und 3. Aufgrund dieser Bauweise wird eine große Flexibilität bei der Herstellung erreicht, da die Module 2 bis 4 weitestgehend unabhängig voneinander herstellbar sind. Da die Front- und Heckmodule 2 und 3 mit den Vorder- und Hinterachsen unmittelbar am Vorder- bzw. Hinterende des Omnibusses 1 angeordnet sind, ergibt sich für die Fahrgastzelle 4 eine große gestalterische Freiheit. Insbesondere kann die Fahrgastzelle 4 einen sehr tief angeordneten und durchgehend eben ausgebildeten Boden ohne Radkästen aufweisen, wie es insbesondere für Omnibusse im Linieneinsatz vorteilhaft ist.

Obwohl der in Fig. 1 dargestellte Omnibus 1 einen extrem langen Radstand hat, kann aufgrund der vorhandenen Hinterradlenkung erreicht werden, daß er sich kinematisch bei Kurvenfahrt ähnlich wie ein herkömmlicher Omnibus mit gleicher Länge, jedoch kürzerem Radstand und unlenkbaren Hinterrädern verhält.

Dies wird anhand der Fig. 2 erläutert.

Bei herkömmlicher Bauweise würde der Omnibus 1 unlenkbare Hinterräder 6' sowie lenkbare Vorderräder 5' sowie vergleichsweise große Überhänge vor der Vorderachse bzw. hinter der Hinterachse aufweisen. Auf diese Weise wird bei einem Lenkeinschlag der Vorderräder 5' ein Bogen um ein Zentrum Z gefahren, wie es in Fig. 2 dargestellt ist. Bei entsprechender Bemessung der Fahrzeugüberhänge vor der Vorderachse bzw. hinter der Hinterachse ergibt sich auch bei großer Fahrzeuglänge noch eine für den Fahrer gut beherrschbare Manövrierfähigkeit auf engen und kurvenreichen Wegen.

Obwohl das erfindungsgemäße Fahrzeug einen wesentlich größeren Radstand aufweist, kann aufgrund der Lenkbarkeit der Hinterräder 6 ein entsprechendes kinematisches Verhalten des Omnibusses 1 erreicht werden. Wenn die Hinterräder 6 um ein entsprechendes Maß gegensinnig zu den Vorderrädern 5 ausgelenkt werden, läßt sich erreichen, daß der Omnibus 1 mit seinem die Räder 5 und 6 aufweisenden Fahrwerk das Zentrum Z auf gleicher Bewegungsbahn zu umfahren vermag wie im Falle eines Fahrwerkes mit den Rädern 5' und 6'.

Aufgrund der Hinterradlenkung merkt der Fahrer also bei Kurvenfahrt den deutlich verlängerten Radstand nicht. Vielmehr zeigt der Omnibus ein für den Fahrer bereits gewohntes kinematisches Verhalten bei Kurvenfahrt.

Auch wenn sich die Bewegungsbahn des erfindungsgemäßen Omnibusses 1 gegenüber einem herkömmlichen Omnibus nicht ändert, so durchlaufen die Räder 5 und 6 zwangsläufig bei Kurvenfahrt andere Fahrspuren als die Räder 5' und 6'. Bei normaler Straßenfahrt ist dies regelmäßig unbeachtlich. Jedoch können in bestimmten Situationen gewisse Schwierigkeiten auftreten. Dies gilt insbesondere dann, wenn der Omnibus 1 gemäß Fig. 3 dicht neben einer Bordsteinkante 7 anhält, um beispielsweise Fahrgäste an einer Haltestelle ein- und aussteigen zu lassen. Nach dem Halt wird der Fahrer in der Regel die Vorderräder stark in eine von der Bordsteinkante 7 wegweisende Richtung steuern, um den Omnibus 1 wieder in den normalen Verkehrsfluß einzuordnen. Würden bei einer derartigen Fahrsituation die lenkbaren Hinterräder 6 in einer der Fig. 2 entsprechenden Weise gesteuert, so würde das der Bordsteinkante 7 benachbarte Hinterrad 6 die Bordsteinkante 7 überrollen. Bei herkömmlichen Omnibussen mit unlenkbaren Hinterrädern und großem Hecküberhang kann eine vergleichbare Situation wegen der Unlenkbarkeit der Hinterräder nicht auftreten; lediglich der Hecküberhang wird eine mehr oder weniger weite Schwenkbewegung über die Bordsteinkante 7 hinweg ausführen.

Um nun ein unter Komfort- und Sicherheitsaspekten nicht tolerierbares Überrollen der Bordsteinkante 7 durch zumindest eines der Hinterräder 6 zu vermeiden, ist bei dem erfindungsgemäßen Omnibus 1 vorgesehen, daß die Hinterradlenkung eine besondere Betriebsweise aufweist, bei der die Hinterräder während einer kurzen Fahrphase vorübergehend auf Spuren laufen, die die zu Beginn der Fahrphase vorliegenden Radaufstandsbereiche von Vorderrad und Hinterrad auf der kurvenäußeren Fahrzeugseite etwa geradlinig verbinden oder kurveninnenseitig dieser Verbindungslinie liegen.

Vereinfacht ausgedrückt bedeutet dies, daß die Hinterräder 6 im Vergleich zu der Betriebsweise nach Fig. 2 auf mehr oder weniger stark verminderte Lenkwinkel eingestellt werden, wobei mit zunehmender Wegstrecke ein der Fig. 2 entsprechender Lenkwinkel erreicht wird. Wenn also der Fahrer gemäß Fig. 3 den Omnibus 1 mit festgehaltenem Lenkeinschlag der Vorderräder in die Pos. 1' fährt, so werden die Hinterräder 6 in zunehmender Weise in Gegenrichtung zu den Vorderrädern 5 ausgelenkt, bis eine der Fig. 2 entsprechende Lenkwinkelkombination auftritt.

Auf diese Weise wird einerseits ein Überrollen der Bordsteinkante 7 mit einem der Hinterräder 6 verhindert. Andererseits wird durch die Hinterradlenkung die Wendigkeit des Omnibusses 1 soweit als möglich erhöht.

Die besondere Betriebsweise wird aktiviert, wenn die Fahrgeschwindigkeit des Fahrzeuges einen Grenzwert $v_1$ unterschreitet und der Vorderradlenkwinkel kleiner als ein Grenzwert $\alpha_1$ ist.

Anstelle einer automatischen Aktivierung der besonderen Betriebsweise bei Unterschreitung der vorangehend genannten Grenzwerte kann auch eine manuelle Aktivierung durch den Fahrer mittels einer Taste od.dgl. vorgesehen sein.

Im übrigen kann die besondere Betriebsweise auch aktiviert werden, wenn eine Bustür geöffnet und danach wieder geschlossen worden ist oder die Haltestellenbremse betätigt wurde.

Die besondere Betriebsweise wird grundsätzlich wieder deaktiviert, wenn der Betrag des Vorderradlenkwinkels von größeren Betragswerten her einen Betrag von $\alpha_2$ unterschreitet oder wenn der Hinterradlenkwinkel im Verlauf der besonderen Betriebsweise einen Wert erreicht, welcher sich bei dem jeweiligen Vorderradlenkwinkel auch bei normaler Betriebsweise einstellen würde.

Im übrigen kann wiederum auch eine manuelle Deaktivierung durch den Fahrer mittels einer Taste od.dgl. vorgesehen sein.

Oberhalb einer Fahrgeschwindigkeit $v_2$ kann der errechnete Hinterradlenkwinkel mit einem Faktor korrigiert werden, welcher den Schräglaufwinkel der Hinterräder berücksichtigt.

Oberhalb einer Geschwindigkeitsschwelle $v_3$ wird die besondere Betriebsweise in jedem Falle deaktiviert.

Zwischen den Geschwindigkeitsschwellen $v_2$ und $v_3$ kann der maximal mögliche Hinterradlenkwinkel kontinuierlich reduziert werden.

Bei Rückwärtsfahrt wird die besondere Betriebsweise grundsätzlich deaktiviert. Die Hinterräder werden dann mit vorgegebenem Übersetzungsverhältnis gegenläufig zu den Vorderrädern ausgelenkt. Wahlweise kann für die Rückwärtsfahrt auch auf eine Betriebsweise umgestellt werden, bei der die Hinterräder ständig in Geradeausstellung bleiben.

Bei Fahrtrichtungswechsel von Rückwärtsfahrt auf Vorwärtsfahrt kann die besondere Betriebsweise aktiviert werden, wenn die oben angegebenen Schwellen $v_1$ und $\alpha_1$ unterschritten werden.

Für die besondere Betriebsweise kann der Hinterradlenkwinkel wie folgt berechnet werden:

$$\delta = \alpha(A) + \gamma(A) - \gamma(N)$$

$$\gamma(N) = \sum_K [(\tan\delta(N) + \tan\alpha(N)) \cdot Dx\,(K) \cdot \cos\beta] \cdot 1/L$$

$$\gamma(A) = \sum_{K} [(\tan\delta(A) + \tan\alpha(A)) \cdot Dx(K) \cdot \cos\beta] \cdot 1/L$$

$$\tan\beta = (LH \cdot \tan\alpha - LV \cdot \tan\delta) \cdot 1/L$$

wobei die verwendeten Zeichen die folgenden Bedeutungen haben:

$\alpha$     Lenkwinkel der Vorderräder
$\delta$     Lenkwinkel der Hinterräder
$\gamma$     Gierwinkel des Fahrzeuges
$\beta$     Schwimmwinkel des Fahrzeuges
LH     Abstand zwischen Fahrzeugschwerpunkt und Hinterachse
LV     Abstand zwischen Fahrzeugschwerpunkt und Vorderachse
L     Länge des Fahrzeuges
Dx     durchfahrenes Wegstück
A     Index zur Bezeichnung eines Zustandes, der um eine vorgegebene Wegstrecke (insbesondere Fahrzeuglänge L) zurückliegt
N     Index zur Bezeichnung eines aktuellen Zustandes
K     Anzahl der Wegstücke

Gegebenenfalls kann das Fahrzeug auch Signalgeber besitzen, die eine Bordsteinkante abzutasten vermögen und vorzugsweise berührungsfrei arbeiten. Damit kann die Hinterradlenkung auch in Abhängigkeit von den Signalen dieser Signalgeber gesteuert werden.

**Patentansprüche**

1. Nicht spurgebundenes Fahrzeug mit willkürlich betätigbarer Vorderradlenkung und einer Hinterradlenkung, die die Hinterräder bei Kurvenfahrt selbsttätig gegensinnig zu den Vorderrädern auszulenken vermag und auf eine besondere Betriebsweise einstellbar ist, bei der bei willkürlicher Auslenkung der Vorderräder aus einer Geradeausstellung oder einer dazu benachbarten Stellung das jeweils kurvenaußenseitige Hinterrad zunächst auf einer Spur läuft, die die bei Beginn der besonderen Betriebsweise vorliegenden Radaufstandsbereiche von Vorderrad und Hinterrad auf der kurvenäußeren Fahrzeugseite etwa geradlinig verbindet oder kurveninnenseitig einer die genannte Radaufstandsbereiche verbindenden geraden Linie verläuft,
**dadurch gekennzeichnet,**

daß die Hinterradlenkung bei normalem selbsttätigen Betrieb den Hinterradlenkwinkel derart zu steuern vermag, daß kinematisch ein Fahr- bzw. Lenkverhalten wie bei einem Fahrzeug gleicher Länge, jedoch mit kurzem bzw. kürzerem Radstand und nicht lenkbaren Hinterrädern erreicht wird, und
daß die Hinterradlenkung nach einem Stillstand des Motors entsprechend der besonderen Betriebsweise arbeitet, wenn die unmittelbar nach dem Stillstand vorliegende Kombination der Vorderrad- und Hinterradlenkwinkel von einer bei Normalbetrieb möglichen Kombination um mehr als einen vorgegebenen Schwellwert abweicht.

2. Fahrzeug nach Anspruch 1,
**dadurch gekennzeichnet,**

daß die Hinterradlenkung manuell oder, während einer Phase nach einem Halt oder einer Unterschreitung einer geringen Mindestgeschwindigkeit ($v_1$) des Fahrzeuges, automatisch auf die besondere Betriebsweise einstellbar ist.

3. Fahrzeug nach einem der Ansprüche 1 oder 2,
**dadurch gekennzeichnet,**

daß die Hinterräder bei besonderer Betriebsweise nach Durchlaufen einer der Länge des Radstandes etwa entsprechenden Strecke ihren dann erreichten Lenkwinkel bei nachfolgenden Lenkwinkeländerungen der Vorderräder in Richtung desjenigen Hinterradlenkwinkels verändern, der sich bei normalem Betrieb einstellen würde.

4. Fahrzeug nach einem der Ansprüche 1 bis 3,
   **dadurch gekennzeichnet,**

   daß die Hinterradlenkung bei besonderer Betriebsweise nach Durchlaufen einer der Länge des Radstandes etwa entsprechenden Strecke den dann erreichten Lenkwinkel der Hinterräder zunächst eingestellt läßt, bis die Vorderradlenkung einen Vorderradlenkwinkel erreicht, welcher sich bei normaler Betriebsweise in Kombination mit dem eingestellten Hinterradlenkwinkel einstellen kann, und daß dann der Hinterradlenkwinkel entsprechend der normalen Betriebsweise in Abhängigkeit vom Vorderradlenkwinkel eingestellt wird.

5. Fahrzeug nach einem der Ansprüche 1 bis 4,
   **dadurch gekennzeichnet,**

   daß der maximal einstellbare Hinterradlenkwinkel durch einen vorgebbaren Proportionalitätsfaktor zwischen Vorderrad- und Hinterradlenkwinkel begrenzt wird.

6. Fahrzeug nach einem der Ansprüche 1 bis 5,
   **dadurch gekennzeichnet,**

   daß die Hinterradlenkung automatisch zum - gegebenenfalls teilweisen - Ausregeln von Störeinflüssen, z.B. Seitenwindstörungen, arbeitet.

**Claims**

1. A vehicle which is not track-bound having manually operable front-wheel drive and a rear-wheel drive which is capable of automatically deflecting the rear wheels in a direction opposite to the front wheels when cornering and can be set to a special operating mode in which, when the front wheels are purposely deflected from a straight position or a position adjacent thereto, the respective rear wheel at the outside of the corner initially runs on a track which links, in an approximately straight line, the wheelbase regions of front wheel and rear wheel at the side of the vehicle on the outside of the corner as they were positioned at the point when the special operating mode was initiated or, on the inside of the corner, runs along a line linking said wheelbase regions,
   **characterised in that**

   during normal automatic operation, the rear-wheel drive is able to control the rear-wheel angle of lock so as to produce kinematically a driving and steering behaviour such as would be obtained by a vehicle of the same length but with short or shorter wheelbase and non-drivable rear wheels and in that
   once the engine has come to a stop, the rear-wheel drive acts in a manner corresponding to the special operating mode if the combination of front-wheel and rear-wheel angle of lock existing immediately after the stoppage deviates by more than a predetermined threshold value from a combination possible in normal operating mode.

2. A vehicle as claimed in claim 1,
   **characterised in that**

   the rear-wheel drive can be set manually or, during a phase following a stop or a drop below a low minimum speed ($v_1$) of the vehicle, automatically to the special operating mode.

3. A vehicle as claimed in one of claims 1 or 2,
   **characterised in that**

   during special operating mode, after having travelled through a course corresponding approximately to the length of the wheelbase, the rear wheels change the angle of lock they have then reached with subsequent angle of lock changes on the front wheels in a direction of the angle of lock on the rear wheels that would be set during normal operation.

4. A vehicle as claimed in one of claims 1 to 3,
   **characterised in that**

during special operating mode, after having travelled through a course corresponding approximately to the length of the wheelbase, the rear-wheel drive initially allows the angle of lock of the rear-wheels reached at that point to be adjusted until the front-wheel drive reaches a front-wheel angle of lock that can be set in normal operating mode in combination with the set rear-wheel angle of lock and in that the rear-wheel angle of lock is then set so that it corresponds to normal operating mode depending on the front-wheel angle of lock.

5. A vehicle as claimed in one of claims 1 to 4,
   **characterised in that**

   the maximum adjustable rear-wheel angle of lock is limited by a factor of proportionality between front-wheel and rear-wheel angle lock, which can be predetermined.

6. A vehicle as claimed in one of claims 1 to 5,
   **characterised in that**

   the rear-wheel drive automatically works - under certain circumstances partially - so as to counter disruptive influences, e.g. problems with side winds.

## Revendications

1. Véhicule non guidé possédant une direction des roues avant pouvant être commandée arbitrairement et une direction des roues arrière capable de braquer les roues arrière automatiquement en sens contraire aux roues avant en virage et pouvant être amenée à un mode de fonctionnement particulier dans lequel, lors d'un braquage arbitraire des roues avant à partir d'une position de marche en ligne droite ou d'une position qui en est voisine, la roue arrière se trouvant à l'extérieur de la courbe suit initialement une trace reliant à peu près en ligne droite les aires d'appui de la roue avant et de la roue arrière existant au début du mode de fonctionnement particulier sur le côté du véhicule situé à l'extérieur de la courbe, ou s'étendant, sur le côté du véhicule situé à l'intérieur de la courbe, suivant une ligne droite reliant les aires d'appui mentionnées des roues,
   caractérisé en ce

   que la direction des roues arrière est capable, lors du fonctionnement automatique normal, de commander l'angle de braquage des roues arrière de manière que soit obtenu, cinématiquement, un comportement de roulement ou de direction comme avec un véhicule de même longueur, mais à empattement court ou plus court et des roues arrière non dirigeables, et
   que la direction des roues arrière agit, après un arrêt du moteur, selon le mode de fonctionnement particulier lorsque la combinaison d'angles de braquage des roues avant et arrière existant immédiatement après l'arrêt dévie de plus d'une valeur de seuil préfixée d'une combinaison possible en fonctionnement normal.

2. Véhicule selon la revendication 1, caractérisé en ce que la direction des roues arrière peut être amenée manuellement ou, pendant une phase faisant suite à un arrêt du véhicule ou à un abaissement de la vitesse du véhicule au-dessous d'une faible vitesse minimale ($v_1$), automatiquement au mode fonctionnement particulier.

3. Véhicule selon la revendication 1 ou 2, caractérisé en ce que, dans le mode de fonctionnement particulier, les roues arrière, après avoir parcouru une distance correspondant à peu près l'empattement, changent leur angle de braquage atteint à ce moment, lors des changements consécutifs de l'angle de braquage des roues avant, dans le sens de l'angle de braquage des roues arrière qui s'établirait lors du fonctionnement normal.

4. Véhicule selon une des revendications 1 à 3, caractérisé en ce que la direction des roues arrière, dans le mode de fonctionnement particulier, après qu'une distance correspondant à peu près à l'empattement a été parcourue, maintient tout d'abord l'angle de braquage des roues arrière atteint à ce moment, jusqu'à ce que la direction des roues avant atteigne un angle de braquage des roues avant pouvant s'établir, lors du mode de fonctionnement normal, en combinaison avec l'angle de braquage ajusté des roues arrière, et que l'angle de braquage des roues arrière est ajusté ensuite, en fonction de l'angle de braquage des roues avant, conformément au mode de fonctionnement normal.

5. Véhicule selon une des revendications 1 à 4, caractérisé en ce que l'angle de braquage maximal ajustable des roues arrière est limité par un facteur de proportionnalité pouvant être préfixé entre l'angle de braquage des roues avant et l'angle de braquage des roues arrière.

6. Véhicule selon une des revendications 1 à 5, caractérisé en ce que la direction des roues arrière fonctionne automatiquement pour la suppression - éventuellement partielle - par régulation d'influences pertubatrices, par exemple de perturbations dues au vent latéral.

Fig. 1

Fig. 2

Fig. 3